# EUROPEAN PATENT SPECIFICATION

(11) **EP 2 197 173 B1**
(45) Date of publication and mention of the grant of the patent: **08.05.2013**
(21) Application number: 09178569.1
(22) Date of filing: 09.12.2009
(51) Int. Cl.: H04L 29/06, G06F 17/30

(54) **Method, apparatus and system for modifying website flow stack to manage site-wide configuration**
Verfahren, Vorrichtung und System zur Änderung des Flussblockes auf einer Website zur Verwaltung der Site-weiten Konfiguration
Procédé, appareil et système pour modifier la pile de flux d'un site Web en vue de gérer la configuration du site entier

(30) Priority: 09.12.2008 US 120960 P; 30.03.2009 US 414094
(43) Date of publication of application: 16.06.2010
(73) Proprietor: Research In Motion Limited, Waterloo, ON N2L 3W8 (CA)
(72) Inventor: Stinson, Charles, Laurence, Mississauga Ontario L5M 9K4 (CA); Kim, Sang-Heun, Mississauga Ontario L5B 4M2 (CA); Mallick, Martyn, Henri, Waterloo Ontario N2V 1K8 (CA)
(74) Representative: MERH-IP Matias Erny Reichl Hoffmann

(56) References cited:
- GB-A- 2 354 854
- US-A1- 2002 133 540
- US-A1- 2003 020 747
- Anonymous: "Products - Cookie Editor" www.proxoft.com 10 April 2008 (2008-04-10), XP002567470 Retrieved from the Internet: URL:http://web.archive.org/web/20080410221 756/http://www.proxoft.com/CookieEditor.as p> [retrieved on 2010-02-09]

## Description

### CROSS REFERENCE TO RELATED APPLICATION

The present specification claims priority to US Provisional Patent Application 61/120,960 filed December 9, 2008.

### FIELD

The present specification relates generally to communication technologies and more particularly to a method, apparatus and system for modifying website flow stack to manage site-wide configuration.

### BACKGROUND

Desktop-focused websites often have plurality of configuration options such as language, text size, time zone, etc. Input for establishing configuration options are often provided as part of a fillable form or other interactive component, as part of overall rendering of an entire webpage. In other contexts configuration options are established during a membership sign-up process.

Once configurations options are set, the web-server utilizes the stored settings to customize browsing experience based on those configuration options. For example, on the existing ticketmaster.com website, a locale can be set. Changing the locale causes the home page to render so as to display events that are proximal to the locale. Tvguide.com has similar settings, which cause changes to the displayed television listings according to locale. "Anonymous: 'Products - Cookie Editor' www.proxoft.com 10 April 2008, XP002567470ⁿ that has been retrieved from the Internet from URL http://web.archive.org/web/20080410221756/http://www.proxoft.com/CookieEditor.asp shows a software application ("Cookie Editor") that can be used to edit Cookies that are used by a Web server and which are stored on a client computer for future access. US 2002/133540 A1 discloses technologies for automatically generating cookies so that a user need not reenter user information that the user has already entered.

### SUMMARY

The present invention relates to a method of providing interactive content on a portable computing device according to the appended claims.

An aspect of the specification provides a method of providing interactive content on a portable computing device, the method comprising accessing a website from a server; the website including a first set of configuration option programming Instructions and including at least one web page; said first set of configuration option programming instructions comprises scripts; examining, at said portable computing device, a portion of said website; extracting configuration options from the first set of configuration option programming instructions based on a received schema which points to said first set of configuration options within the website; generating the configuration options using a second set of configuration option programming instructions said generating including obviating the execution of any of said scripts receiving a configuration option selection using the second set of configuration option programming instructions said receiving and selection including obviating the execution of any of said scripts, receiving one or more web pages from the website corresponding to the configuration option selection; and, generating the one or more web pages.

The configuration options can include at least one of a locale, language, how many items to display, whether or not to show images or not, color of links.

The method can further comprise receiving a schema and performing the extracting based on the schema. The schema can be received from a schema server separate from the web server. The schema can be received from the web-server.

The first set of programming instructions may comprise scripts. The scripts may be one of Javascripts or dynamic hypertext markup language. The scripts may not be stored locally on said portable computing device.

Another aspect of the specification provides a portable computing device comprising storage configured to maintain a web browser application and at least one processor connected to the storage and configured to execute the web browser application. The portable computing device also comprises an interface connected to the processor. The processor is configured to access a website at a web-server via the interface. The website includes a first set of configuration option programming instructions and including at least one web page; Said first set of configuration option programming instructions comprises scripts. The processor is further configured to extract configuration options from the first set of configuration option programming instructions. The portable computing device further comprises a display connected to the processor. The processor is further configured to generate the configuration options using a second set of configuration option programming instructions said generating including obviating the execution of any of said scripts. The portable computing device further comprises an input device connected to the processor. The processor is also configured to receive a configuration option selection using the second set of configuration option programming instructions via the input device said receiving aid said selection including obviating the execution of any of said scripts. The processor is also configured to receive one or more web pages from the website corresponding to the configuration option selection. The processor is also configured to generate the one or more web pages on the display via the web browser application.

Another aspect of the specification provides a computer readable storage medium configured to maintain a plurality of programming instructions for a processor of a portable computing device. The processor of the portable computing device is configured to execute the programming instructions. The programming instructions comprise a method according to the appended claims.

### BRIEF DESCRIPTION OF THE DRAWINGS

Figure 1 is schematic representation of a system for modifying website flow stack to manage site-wide configuration.
Figure 2 is a schematic representation of the client machine computing device in Figure 1.
Figure 3 shows a flow-chart depicting a method for modifying website flow stack to manage site-wide configuration.
Figure 4 shows an example of a web page stored on the web server in the system of Figure 1.
Figure 5 shows an example of another web page stored on the web server in the system of Figure 1.
Figure 6 shows an example of another web page stored on the web server in the system of Figure 1.
Figure 7 shows the system of Figure 1 during exemplary performance of certain blocks in the method of Figure 3.
Figure 8 shows an example of the configuration options extracted from the website of Figure 1 and generated on the display of the client machine of Figure 1 using programming instructions native to the client machine of Figure 1.
Figure 9 shows the web page of Figure 5 as generated on the display of the client machine of Figu re 1.
Figure 10 shows an example of extracted configuration options as one exemplary alternative to the extracted configuration options of Figure 8.

### DETAILED DESCRIPTION OF THE EMBODIMENTS

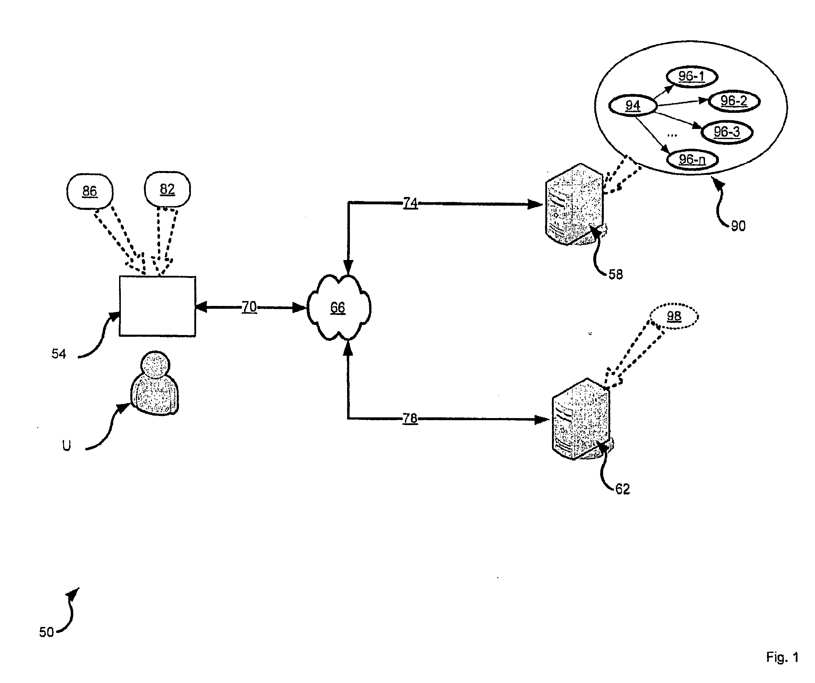

Referring to Figure 1, a system for providing interactive content on a computing device is indicated generally at 50. In a present embodiment system 50 comprises a first computing device in the form of a client machine 54 and a second computing device in the form of a web server 58, and a third computing device in the form of a schema server 62. In a present embodiment client machine 54 comprises a portable computing device. A network 66 interconnects each of the foregoing components. A first link 70 interconnects client machine 54 and network 66. A second link 74 interconnects server 58 and network 66. A third link interconnects server 62 and network 66.

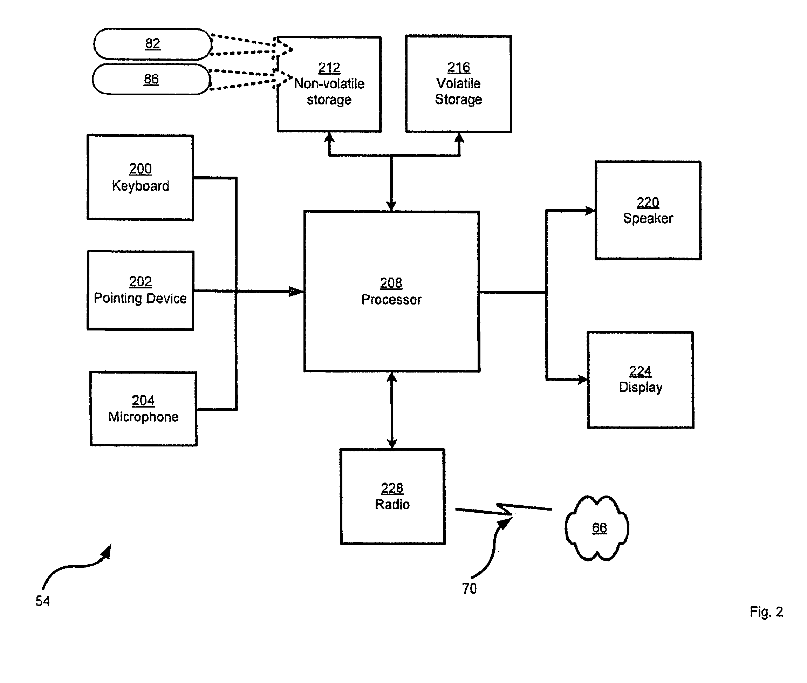

Referring briefly to Figure 2, a schematic block diagram shows client machine 54 in greater detail. It should be emphasized that the structure in Figure 2 is purely exemplary, and contemplates a device that can be used for both wireless voice (e.g. telephony) and wireless data (e.g. email, web browsing, text) communications. (Note that various functionalities such as the voice functionality, email functionality, etc. are optional). Client machine 54 includes a plurality of input devices which in a present embodiment includes a keyboard 200, a pointing device 202 (e.g. a trackwheel, a trackball, or a touch screen) and a microphone 204. Other input devices, such as a camera may optionally be contemplated. Input from keyboard 200 and microphone 204 is received at a processor 208, which in turn communicates with a non-volatile storage unit 212 (e.g. read only memory ("ROM"), Erasable Electronic Programmable Read Only Memory ("EEPROM"), Flash Memory) and a volatile storage unit 216 (e.g. random access memory ("RAM")). It will now be understood by those skilled in the art that non-volatile storage unit 212 and volatile storage unit 216 are non-limiting examples of computer readable storage media. Other examples of computer readable storage media include a removable storage card that can be received in a removable storage card reader that is incorporated into client machine 54 (not shown).

Programming instructions that implement the functional teachings of client machine 54 as described herein are typically maintained, persistently, in non-volatile storage unit 212 and used by processor 208 which utilizes volatile storage 216 during the execution of such programming instructions. Of particular note is that non-volatile storage unit 212 persistently maintains a web browser application 82 and a cache 86. Web browser application 82 can be executed on processor 208 making use of volatile storage 216 as appropriate. Cache 86 can be accessed by processor 208 as needed, keeping copies of cache 86 on volatile storage 216 as needed. Various other applications (not shown) are maintained in non-volatile storage unit 212 according to the desired configuration and functioning of client machine 54.

Web browser application 82 is configured to provide basic web browser functionality on client-machine 54. Web browser application 82 can be referred to as a mini-browser, in the sense that it is provided on client machine 54 which itself has a form factor that is "miniaturized", at least in relation to the form factor of a desktop computer. As will be explained further below, web browser application 82 is configured to render web pages on the relatively small display of client machine 54, and during such rendering attempt to render those pages in a format that conveys data, as much as possible, substantially in the same manner as if those web pages had been rendered on a full browser such as Internet Explorer® (from Microsoft Corporation, One Microsoft Way, Redmond, Washington) or Firefox® (from Mozilla Foundation, 1981 Landings Drive, Building K, Mountain View, CA 94043-0801, USA.) on a traditional desktop or laptop computer. Web browser application 82 thus provides basic HTML and other web-browsing capability, such as Java script, although subject to features provided herein which can obviate or reduce the need for use of Java script and thereby reduce stresses on the computing resources of client machine 54. Furthermore, even though web browser application 82 is able to execute scripts, certain scripts may be too large to maintain within the constrained storage on client machine 54 and thus client machine 54 may need to temporarily download certain scripts in order to run them, and then delete those scripts once execution is complete. In general, client machine 54 is configured to interact with content available over network 66, including web content on web server 58 via web browser application 82.

Returning again to Figure 1, web server 58 is configured to host a website 90 that includes, in a present embodiment, programming instructions representing configuration options 94. Website 90 also comprises a first at least one web page 96-1 that corresponds with a first configuration option associated with configurations options 94, a second at least one web page 96-2 that corresponds with a second configuration option associated with configuration options 94, and a third at least one web page 96-3 that corresponds with a third configuration option associated with configuration options 94. One or more additional web pages can also be provided, indicated in the Figures as web pages 96-n, each of which can also correspond with one or more respective additional configuration options associated with configuration options 94. Website 90, including options 94 and web pages 96-1 and web page 96-2, are configured to be accessible via a traditional desktop browser, such as Internet Explorer®, or Firefox®. As will be explained in greater detail below, web browser application 82 is configured to access website 90 and to establish configuration options 94 in a novel manner. Schema server 62 is configured to maintain a web-form schema 98 which can be used by web browser 82 to manage configuration options 94, as will be discussed further below.

Web server 58 and schema server 62 (which can, if desired, be implemented on a single server) can be based on any well-known server environment including a module that houses one or more central processing units, volatile memory (e.g. random access memory), persistent memory (e.g. hard disk devices) and network interfaces to allow servers 58 and 62 to communicate over network 66. For example, server 58 or server 62 or both can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for servers 58 and 62 are contemplated.

It should now be understood that the nature of network 66 and the links 70, 74 and 78 associated therewith is not particularly limited and are, in general, based on any combination of architectures that will support interactions between client machine 54 and servers 58 and 62. In a present embodiment network 66 itself includes the Internet as well as appropriate gateways and backhauls to links 70, 74 and 78. Accordingly, the links 70, 74 and 78 between network 66 and the interconnected components are complementary to functional requirements of those components.

More specifically, link 70 between client machine 54 and network 66 can be based in a present embodiment on core mobile network infrastructure (e.g. Global System for Mobile communications ("GSM"); Code Division Multiple Access ("CDMA"); CDMA 2000; 3G; Evolution-Data Optimized ("EV-DO"), Universal Mobile Telecommunications System ("UMTS"), High Speed Packet Access ("HSPA")) or on wireless local area network ("WLAN") infrastructures such as the Institute for Electrical and Electronic Engineers ("IEEE") 802.11 Standard (and its variants) or Bluetooth® or the like or hybrids thereof. Note that in an exemplary variation of system 50 it is contemplated that client machine 54 may be other types of client machines whereby link 70 is a wired connection.

Link 74 may be based on a T1, T3, 03 or any other suitable wired or wireless connection between server 58 and network 66. Link 78 may be based on a T1, T3, 03 or any other suitable wired or wireless connection between server 62 and network 66.

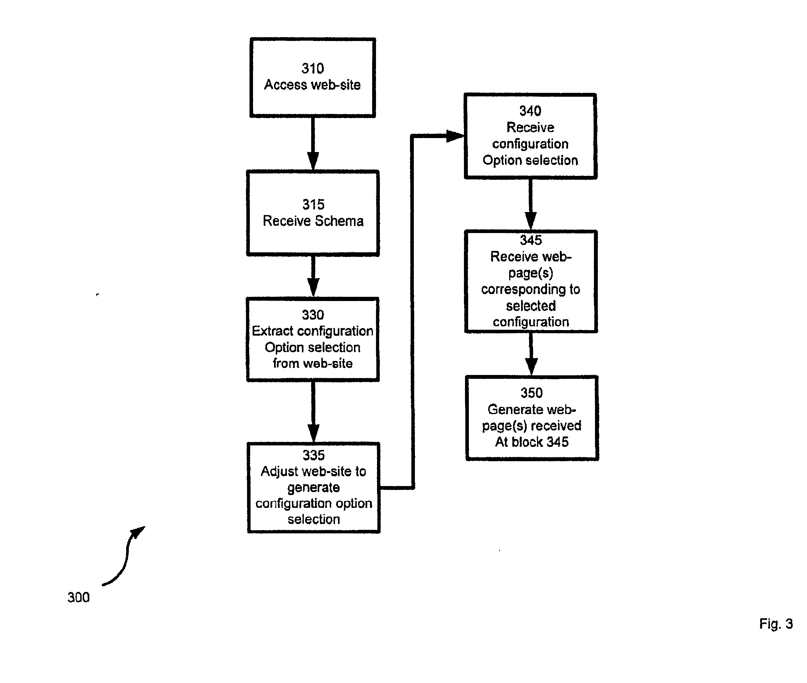

Referring now to Figure 3, a method for modifying website flow stack to manage site-wide configuration is provided in the form of a flow-chart indicated generally at 300. Method 300 will be explained in conjunction with exemplary performance on system 50, but it should be understood that system 50 and method 300 can both be varied within the scope of the present teachings. For example, the method 300 need not performed in the exact sequence as presented in Figure 3.

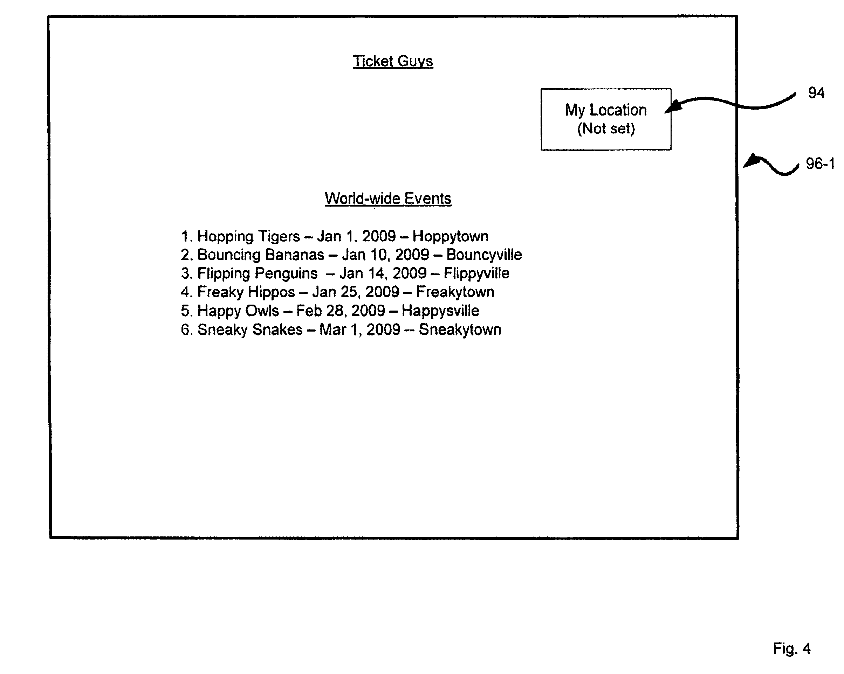

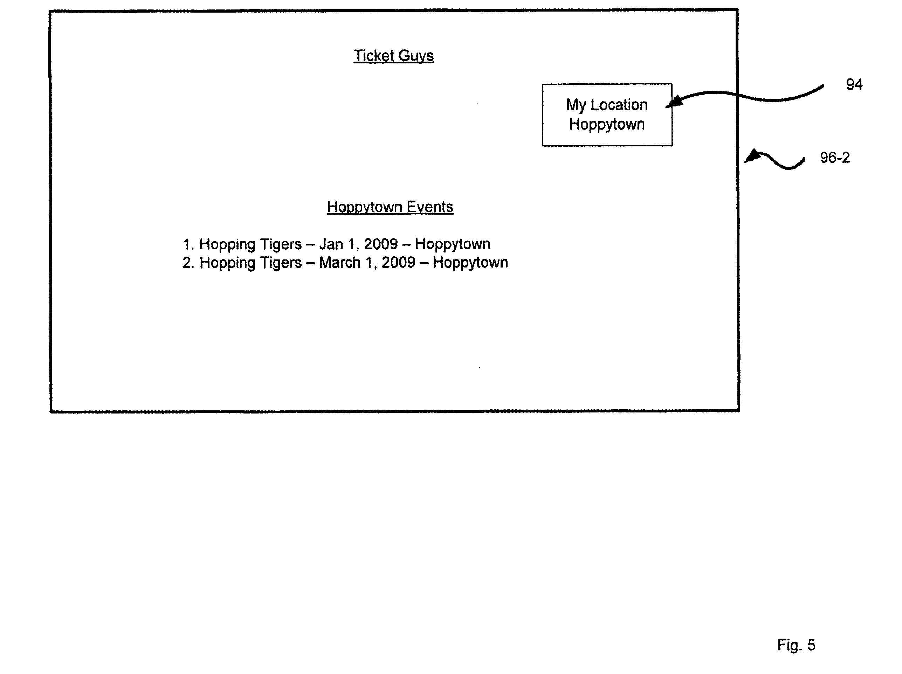

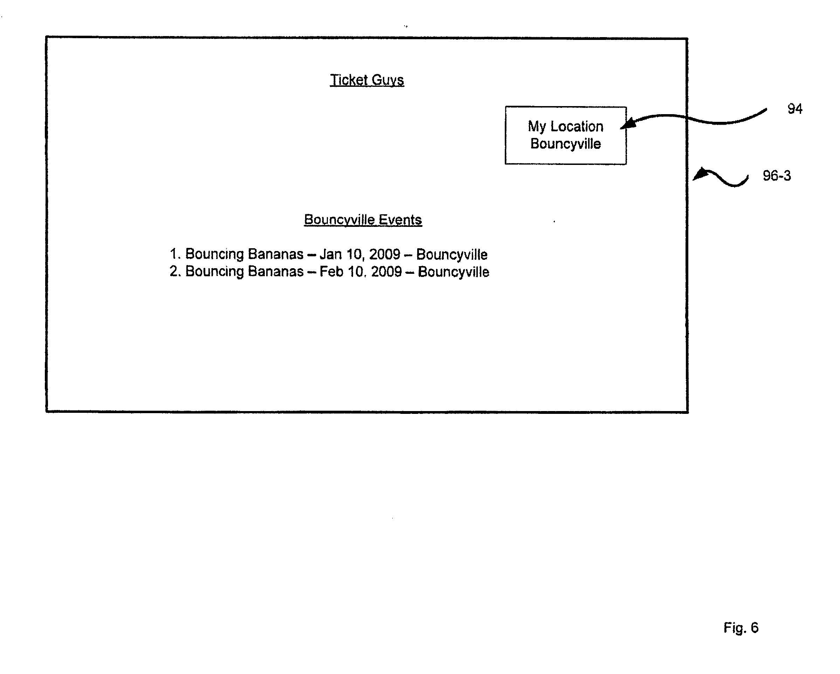

To help further explain the method 300, and system 50, a specific, simplified, but not-limiting example of website 90 is provided. Figure 4, Figure 5 and Figure 6 show web pages 96-1, 96-2 and 96-3 from a hypothetical website 90 hosted on server 58 by an organization referred to as "Ticket Guys". Website 90 is dedicated to providing event listings and selling tickets to events worldwide. Configuration options 94 for website 90 can be set to different locations throughout the world. Figure 4, Figure 5 and Figure 6 represent how web pages 96 are generated on a traditional desktop browser, consistent with how they are programmed and stored on server 58. Figure 4, Figure 5 and Figure 6 show different web pages as generated on a desktop browser based on the location that is provided for configuration options 94. More specifically, Figure 4 corresponds to the configuration option 94 "Not Set", which invokes web page 96-1 which lists events worldwide. Figure 5 corresponds to the configuration option 94 "Hoppytown", which invokes web page 96-2 which lists events only in Hoppytown. Figure 6 corresponds to the configuration option 94 "Bouncyville", which invokes web page 96-2 which lists events only in Bouncyville. Of note is that it is contemplated in this example that configuration options 94 on each of Figure 4, Figure 5, and Figure 6 can be selected using a desktop browser using a pointing device to invoke java script or other dynamic HTML or other programming instructions associated with configuration options 94, in order to change the selected location. Thus, using a desktop browser, the first access of website 90 invokes web page 96-1 in Figure 4. Configuration options 94 in Figure 4 can then be selected using a desktop browser to invoke programming instructions that permit selection of another location and thereby update configuration options 94 and invoke another web page corresponding to the updated location. Such programming instructions for configuration options 94 can include a drop down box, or other selection tool, which can be used to provide input via the desktop browser signifying a new location and thereby update configuration options 94. The updated configuration options can then be stored in a cache so that subsequent access of website 90 leads directly to the web page that corresponded to the cached configuration option.

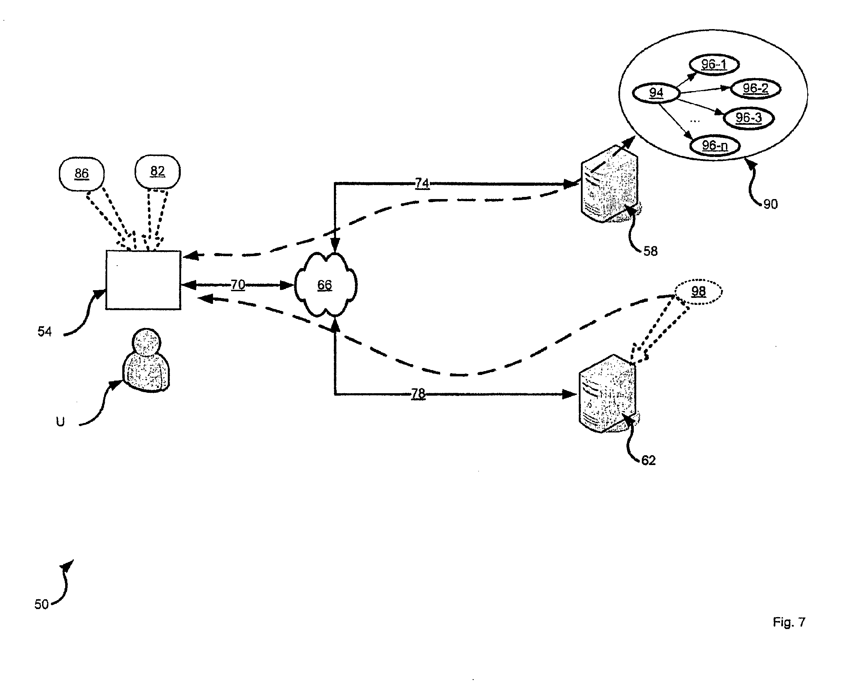

Block 310 comprises accessing a website. In system 50, block 310 is performed by client machine 54, which accesses website 90 via network 66 from server 58 in the usual manner. In a present embodiment, web browser application 82 accesses website 90 via network 66 from server 58 in the usual manner. Block 310 is represented in Figure 7 as website 90 is shown as being accessed by client machine 54 using web browser application 82. The term "accessing" is non-limiting and can include, for example, opening a channel or the like so that client machine 54 can examine or retrieve portions of website 90, or can include retrieving all of website 90.

Block 315 comprises receiving a schema. In system 50, block 315 is performed by client machine 54 which receives schema 98 via network 66 from server 62. Block 315 is also represented in Figure 7 as schema 98 is shown as being received by client machine 54 using web browser application 82. While "retrieving" is used in the present embodiment, "accessing" without actually downloading schema 98 is also contemplated. (Note that block 315 can be omitted where client machine 54 is configured to configured to parse website 90 and derive configuration options 94).

Block 330 comprises extracting configuration options from the website. In a present embodiment, client machine 54 utilizes schema 98 which points to configuration options 94 within website 90, or alternatively schema 98 substitutes configuration options 94 with a client machine configuration options 94. The client machine version of configuration options 94 obviates the java script or other DHTML or other scripting used to implement configuration options 94 on a desktop browser, and in this manner reduces consumption of computing resources on client machine 54, and at the same time obviates generation of data of web page 96-1 that is not required by client machine 54.

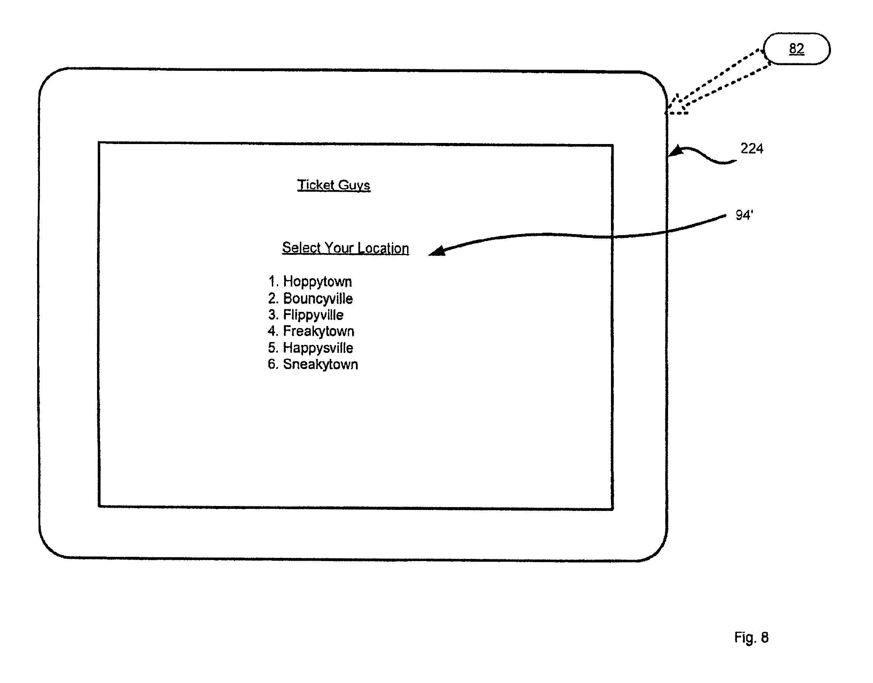

Block 335 comprises adjusting the website to generate configuration option selections. Block 335 is performed by client machine 54 which generates a configuration options screen that is native to client machine 54 and which is not otherwise part of website 90 as website 90 would be generated on a traditional desktop browser. Block 335 is represented in Figure 8 as client machine configuration options 94' are shown generated on display 224 of client machine 54. Client machine configuration options 94' can be generated based on programming instructions, methods, or routines that are inherent to capabilities (e.g. the operating system or other programming objects) of client machine 54. Such programming instructions are configured to receive input that selects a configuration option, such as a standard menu application already inherently stored in non-volatile storage 212 of client machine 54.

Block 340 comprises receiving a configuration option selection. Block 340 is effected via configuration options 94' from block 330. In the example shown in Figure 8, any one of numbers one through six can be entered to select a location and thereby set the configuration option for website 90. In the present example, it will be assumed that "one" is selected, corresponding to the locale "Hoppytown". While the specific example in Figure 8 contemplates a menu selection via number entry, it is to be understood that other ways of setting location is contemplated. For example, another way of setting location is receiving input of a zip code or a postal code. Another way of setting location is receiving input of a city. Other ways are possible. Furthermore, while the example herein focuses on a configuration setting relating to locale, other configurations settings besides location are contemplated. Examples of other types of configuration settings include, without limitation, language; how many items are to be displayed; whether to display images; whether to show advertising; font; color of links, *et cetera.*

It will now be apparent that there are a broad range of configuration options depending on the website 90. For example, where website 90 is the popular Facebook® website, (www.facebook.com) a broad range of configuration options can be managed that are specific to Facebook®. Other non-limiting examples of configuration options can therefore include whether or not to display advertisements, location of images, location of data, colors, fonts, theme selection that is specific to a particular website.

Block 345 comprises receiving web pages corresponding to the selected configuration options. In the present example, since "Hoppytown" was selected at block 340, then web page 96-2 will be received at block 345. Again, the term "receive" can include either downloading from server 58, or from a cached version maintained locally on client machine 54.

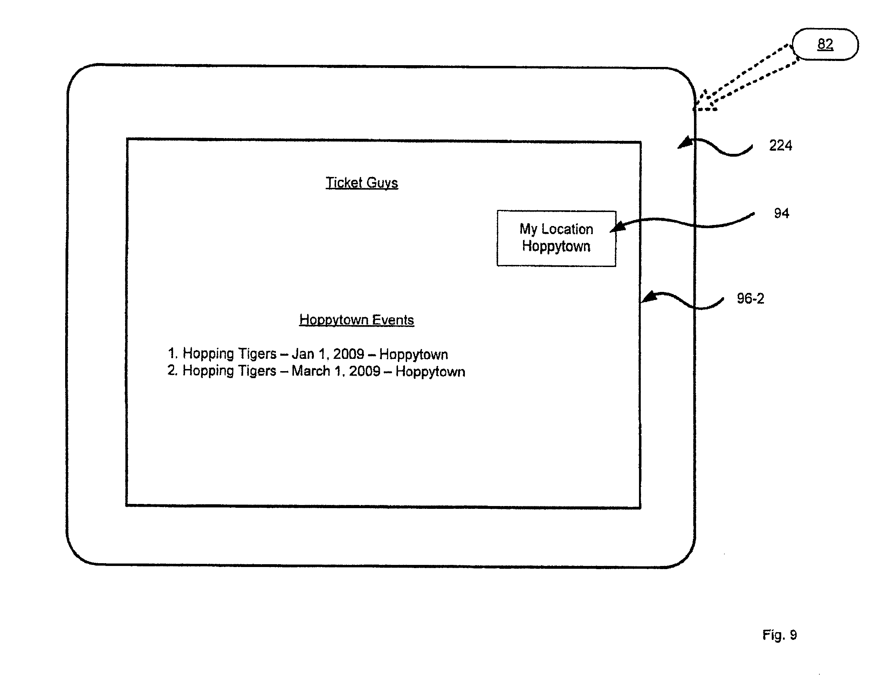

Block 350 comprises generating web pages received at block 345. Web browser application 82 thus generates web page 96-2, configuration options 94, (though generated in the form of the finally selected option) on display 224. Figure 9 shows an example of web page 96-2 generated on display 224. In a present embodiment, web page 96-2 is generated in substantially the same form as it would be presented on a regular desktop browser, except that web page 96-2 itself is reduced in size in relation to a desktop monitor, in order to fit within the relatively smaller area of display 224. Client machine 54 and web browser application 82 are configured to receive selections of various portions of display 224, and if such selections are activated, then to "zoom in" on such selected portions on display 224 and cropping the non-selected portions of web page 96-2. Such functionality for web browser 82 is currently found in the web browser currently implemented in the BlackBerry Bold™ client machine from Research In Motion Inc. of Waterloo, Canada, though to be clear this is a non-limiting example, and this functionality is not required.

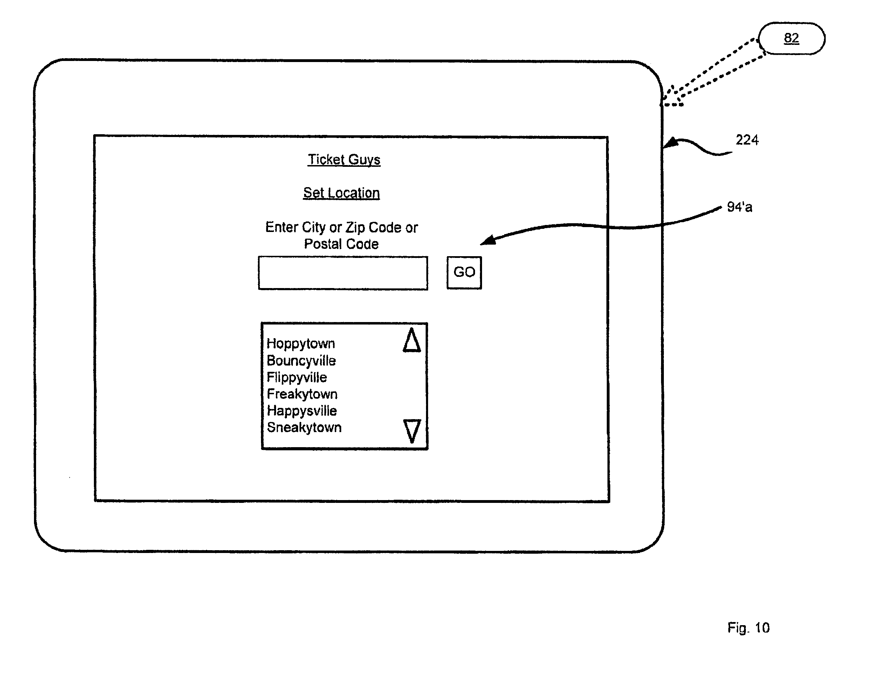

At this point method 300 ends, and web page 96-2 can be navigated in substantially the same manner as would be navigated using a desktop browser. As a variation, however, client machine 54 can be configured so that configuration options 94 are selected on display 224 as shown in Figure 9, then the usual scripting associated with configuration options 94 as maintained on server 58 are ignored in favor of invoking configuration options 94' in Figure 8, and thereby further reduce stresses on computing resources of client machine 54. As a further variation, client machine 54 can be configured to receive input via keyboard 200 (e.g. a unique key sequence) or pointing device 202 in order to directly invoke configuration options 94' in Figure 8 during navigation of any page within website 90, including pages that do not include configuration options 94. As a further variation, the configuration option selected using configuration options 94' can be stored in cache 86, so that during subsequent accessing of website 90 by client machine 54, blocks 310 through 340 can be omitted. As a further variation, schema 98 can be eliminated in favour of client machine 54 dynamically examining website 90 to extract configuration options 94' from configuration options 94 at the time that website 90 is first accessed by client machine 54. A still further variation is shown in Figure 10,where an alternative to configuration options 94' from Figure 8 is shown as configuration options 94'a. In configuration options 94'a, a text entry box is provided that can receive typed text indicating the selected locale, either in the form of a zip code, postal code or city. Figure 10 also shows a scrollable text list which shows various possible locales. Each item in the scrollable list can be selected, or the text from that list can be typed into the text entry box.

Various advantages will now be explained. Website 90 can be accessed and navigated on client machine 54 without programming changes to website 90. Further, such access and navigation on client machine 54 makes good use of computing resources on client machine 54. Further, bandwidth over links 70 and 74 is reduced as, in the present example, web page 96-1 is not ever loaded onto client machine 54. Bandwidth over links 70 and 74 is further reduced as client machine 54 need not make special calls or downloads for particular scripts which are too large to maintain on client machine 54, but which website 90 presumes are present on client machine 54.

These advantages address limitations that arise acutely when web pages are programmed with a focus on the desktop browsing experience, where Internet traffic bandwidth, computing processing resources, and screen area are less constrained than in the portable computing device mini-browsing experience. These web pages often do not render well on portable computing devices, which have access to less bandwidth than desktop wired devices, fewer processing and memory resources, and restricted screen sizes. Additionally, in desktop optimized web pages Javascript is liberally employed for such configuration settings, and yet support for Javascript may be limited on portable computing devices. Where a desktop browsing experience of a particular website involves navigation of a plurality of different web pages to provide different configuration option selection, the teachings herein transparently extract those configuration options and receive selections of those options so that configuration options can be selected without navigating the plurality of web pages contemplated in the desktop context.

Those skilled in the art are to understand that subsets, combinations and variations of the foregoing are contemplated. The claims attached hereto define the scope of the monopoly sought.

## Claims

1. A method of providing Interactive content on a portable computing device (54), the method comprising:
accessing (310), from an interface at said portable computing device (54), a website (90) from a server (58, 62) connectable to said interface via a network (66); said website (90) including a first set of configuration option programming instructions and including at least one web page (96-1, 96-2, 96-3); said first set of configuration option programming Instructions comprising scripts and being associated with configuration options of said website;
retrieving, at said portable computing device (54), a portion of said website (90), said portion including said first set of configuration option programming instructions,
receiving, at said portable computing device (54), a schema (98), said schema pointing to said configuration options within the website (90),
extracting (330), at a processor (208) in said portable computing device (54) and connected to said interface, said associated configuration options as client machine configuration options from said first set of configuration option programming instructions based on said schema (98) or substituting, at said processor (208) in said portable computing device (54) and connected to said interface, said associated configuration options with client machine configuration options as defined by said received schema;
generating, using said processor (208), said client machine configuration options using a second set of configuration option programming instructions; said client machine configuration options being generated on a display (224) of said portable computing device (54) and controlled by said processor (208), said generating including obviating the execution of any of said scripts on said portable computing device;
receiving (340), from an Input device (200, 202, 204) of said portable computing device (54) connected to said processor (208), a configuration option selection of said generated configuration options using said second set of configuration option programming instructions, said receiving and said selection including obviating the execution of any of said scripts on said portable computing device;
receiving (345), through said interface, one or more web pages from said website (90) corresponding to said configuration option selection; and,
generating (350), using said processor (208), said one or more web pages on said display (224) at said portable computing device (54).

2. The method of claim 1 wherein said associated configuration options include at least one of a locale, how many items to display, whether to show images, font, or color.

3. The method of claim 1 or 2 wherein said schema (98) is received from a schema server (62) separate from said server (58).

4. The method of claim 1 or 2 wherein said schema (98) is received from said server (58, 62).

5. The method of any one of claims 1-4 wherein said scripts comprise one of Javascripts or dynamic hypertext markup language.

6. A computer readable storage medium configured to maintain a plurality of programming instructions for performing a method according to any one of claims 1-5 when run on a processor (208) of a portable computing device (54).

7. A portable computing device (54) comprising:
storage (212, 216) configured to maintain a web browser application (82);
at least one processor (208) connected to said storage (212, 216) and configured to execute said web browser application (82);
an interface connected to said processor (208);
a display (224) connected to said processor (208); and
an input device (200, 202, 204) connected to said processor (208);
said portable computing device (54) configured to perform any one of the methods of claims 1-5.

8. A system (50) comprising the portable computing device (54) of claim 7, for providing Interactive content on the portable computing device (54), the system further comprising:
at least one server (58, 62) configured to store a website (90) and a schema (98); said website (90) including a first set of configuration option programming instructions and including at least one web page (96-1, 96-2, 96-3); said first set of programming instructions comprises scripts and being associated with configuration options of said website; said schema pointing to said configuration options within the website (90);
wherein the portable computing device (54) is connectable to said at least one server (58, 62) via a network (66);
said processor (208) is configured to extract (330) configuration options from said first set of configuration option programming instructions based on said schema (98); and,
said processor (208) is further configured to generate (350) said one or more web pages on said display (224) via said web browser application (82).

9. The system of claim 8 wherein said configuration options include at least one of a locale, how many items to display, whether to show images, font, or color.

10. The system of claim 8 or claim 9 wherein said at least one server (58, 62) comprises a web server (58) for hosting said web pages and a schema server (62) for hosting said schema (98).

11. The system of any one of claims 8-10 wherein said first set of programming instructions comprises scripts and said scripts comprise one of Javascripts or dynamic hypertext markup language.

12. The system of any one of claims 8-11 wherein said scripts are not stored locally on said portable computing device (54).

## Patentansprüche

1. Ein Verfahren zum Vorsehen von interaktivem Inhalt auf einer tragbaren Computervorrichtung (54), wobei das Verfahren aufweist:
Zugreifen (310), von einer Schnittstelle an der tragbaren Computervorrichtung (54), auf eine Website (90) von einem Server (58, 62), der mit der Schnittstelle über ein Netzwerk (66) verbunden werden kann; wobei die Website (90) einen ersten Satz von Konfigurationsoptions Programmieranweisungen umfasst und zumindest eine Webseite (96-1, 96-2, 96-3) umfasst; wobei der erste Satz von Konfigurationsoptions-Programmieranweisungen Skripte aufweist und mit Konfigurationsoptionen der Website assoziiert ist;
Abrufen, an der tragbaren Computervorrichtung (54), eines Teils der Website (90), wobei der Teil den ersten Satz von Konfigurationsoptions-Programmieranweisungen umfasst;
Empfangen, an der tragbaren Computervorrichtung (54), eines Schemas (98), wobei das Schema zu den Konfigurationsoptionen in der Website (90) zeigt;
Extrahieren (330), an einem Prozessor (208) in der tragbaren Computervorrichtung (54) und verbunden mit der Schnittstelle, der assoziierten Konfigurationsoptionen als Client-Maschine-Konfigurationsoptionen aus dem ersten Satz von Konfigurationsoptions-Programmieranweisungen basierend auf dem Schema (98), oder Ersetzen, an dem Prozessor (208) in der tragbaren Computervorrichtung (54) und verbunden mit der Schnittstelle, der der assoziierten Konfigurationsoptionen als Client-Maschine-Konfigurationsoptionen, wie durch das empfangene Schema definiert;
Erzeugen, unter Verwendung des Prozessors (208), der Client-Maschine-Konfigurationsoptionen unter Verwendung eines zweiten Satzes von Konfigurationsoptions-Programmieranweisungen; wobei die Client-Maschine-Konfigurationsoptionen auf einer Anzeige (224) der tragbaren Computervorrichtung (54) erzeugt werden und durch den Prozessor (208) gesteuert werden, wobei das Erzeugen ein Verhindern der Ausführung von einem der Skripte auf der tragbaren Computervorrichtung umfasst;
Empfangen (340), von einer Eingabevorrichtung (200, 202, 204) der tragbaren Computervorrichtung (54), die mit dem Prozessor (208) verbunden ist, einer Konfigurationsoptions-Auswahl der erzeugten Konfigurationsoptionen unter Verwendung des zweiten Satzes von Konfigurationsoptions-Programmieranweisungen, wobei das Empfangen und die Auswahl ein Verhindern der Ausführung von einem der Skripte auf der tragbaren Computervorrichtung umfasst;
Empfangen (345), über die Schnittstelle, einer oder mehrerer Webseiten von der Website (90) entsprechend der Konfigurationsoptions-Auswahl; und
Erzeugen (350), unter Verwendung des Prozessors (208), der einen oder mehreren Webseiten auf der Anzeige (224) an der tragbaren Computervorrichtung (54).

2. Das Verfahren gemäß Anspruch 1, wobei die assoziierten Konfigurationsoptionen zumindest eines aus einer Örtlichkeit, wie viele Elemente anzuzeigen sind, ob Bilder zu zeigen sind, Schriftart oder Farbe umfassen.

3. Das Verfahren gemäß Anspruch 1 oder 2, wobei das Schema (98) von einem Schema-Server (62) getrennt von dem Server (58) empfangen wird.

4. Das Verfahren gemäß Anspruch 1 oder 2, wobei das Schema (98) von dem Server (58, 62) empfangen wird.

5. Das Verfahren gemäß einem der Ansprüche 1-4, wobei die Skripte eines aus Javascripts oder dynamischer Hypertext-Auszeichnungssprache aufweisen.

6. Ein computerlesbares Speichermedium, das konfiguriert ist, eine Vielzahl von Programmieranweisungen zu führen zum Durchführen eines Verfahrens gemäß einem der Ansprüche 1-5 bei Ablauf auf einem Prozessor (208) einer tragbaren Computervorrichtung (54).

7. Eine tragbare Computervorrichtung (54), die aufweist:
einen Speicher (212, 216), der konfiguriert ist, eine Web-Browser-Anwendung (82) zu führen;
zumindest einen Prozessor (208), der mit dem Speicher (212, 216) verbunden ist und konfiguriert ist, die Web-Browser-Anwendung (82) auszuführen;
eine Schnittstelle, die mit dem Prozessor (208) verbunden ist;
eine Anzeige (224), die mit dem Prozessor (208) verbunden ist; und
eine Eingabevorrichtung (200, 202, 204), die mit dem Prozessor (208) verbunden ist;
wobei die tragbare Computervorrichtung (54) konfiguriert ist, eines der Verfahren gemäß den Ansprüchen 1-5 durchzuführen.

8. Ein System (50), das die tragbare Computervorrichtung (54) gemäß Anspruch 7 aufweist, zum Vorsehen von interaktivem Inhalt auf der tragbaren Computervorrichtung (54), wobei das System weiter aufweist:
zumindest einen Server (58, 62), der konfiguriert ist zum Speichern einer Website (90) und eines Schemas (98); wobei die Website (90) einen ersten Satz von Konfigurationsoptions-Programmieranweisungen umfasst und zumindest eine Webseite (96-1, 96-2, 96-3) umfasst; wobei der erste Satz von Konfigurationsoptions-Programmieranweisungen Skripte aufweist und mit Konfigurationsoptionen der Website assoziiert ist; wobei das Schema zu den Konfigurationsoptionen in der Website (90) zeigt;
wobei die tragbare Computervorrichtung (54) mit dem zumindest einen Server (58, 62) über ein Netzwerk (66) verbunden werden kann;
wobei der Prozessor (208) konfiguriert ist zum Extrahieren (330) von Konfigurationsoptionen aus dem ersten Satz von Konfigurationsoptions-Programmieranweisungen basierend auf dem Schema (98); und
der Prozessor (208) weiter konfiguriert ist zum Erzeugen (350) der einen oder mehreren Webseiten auf der Anzeige (224) über die Web-Browser-Anwendung (82).

9. Das System gemäß Anspruch 8, wobei die Konfigurationsoptionen zumindest eines aus einer Örtlichkeit, wie viele Elemente anzuzeigen sind, ob Bilder zu zeigen sind, Schriftart oder Farbe umfassen.

10. Das System gemäß Anspruch 8 oder Anspruch 9, wobei der zumindest eine Server (58, 62) einen Web-Server (58) zum Bereitstellen (Hosten) der Webseiten und einen Schema-Server (62) zum Bereitstellen des Schemas (98) a ufwe ist.

11. Das System gemäß einem der Ansprüche 8-10, wobei der erste Satz von Programmieranweisungen Skripte aufweist und die Skripte eines aus Javascripts oder dynamischer Hypertext-Auszeichnungssprache aufweisen.

12. Das System gemäß einem der Ansprüche 8-11, wobei die Skripte nicht lokal auf der tragbaren Computervorrichtung (54) gespeichert sind.

## Revendications

1. Procédé de fourniture de contenu interactif sur un dispositif informatique portable (54), le procédé comprenant :
l'accès (310), à partir d'une interface dans ledit dispositif informatique portable (54), à un site Web (90) d'un serveur (58, 62) pouvant être connecté à ladite interface par l'intermédiaire d'un réseau (66) ; ledit site Web (90) comprenant un premier jeu d'instructions de programmation d'options de configuration et comprenant au moins une page Web (96-1, 96-2, 96-3) ; ledit premier jeu d'instructions de programmation d'options de configuration comprenant des scripts et étant associé à des options de configuration dudit site Web ;
la récupération, dans ledit dispositif informatique portable (54), d'une partie dudit site Web (90), ladite partie comprenant ledit premier jeu d'instructions de programmation d'options de configuration ;
la réception, dans ledit dispositif informatique portable (54), d'un schéma (98), ledit schéma pointant vers lesdites options de configuration dans le site Web (90) ;
l'extraction (330), dans un processeur (208) dans ledit dispositif informatique portable (54) et connecté à ladite interface, desdites options de configuration associées en tant qu'options de configuration de machine de client dudit premier jeu d'instructions de programmation d'options de configuration sur la base dudit schéma (98), ou la substitution, dans ledit processeur (208) dans ledit dispositif informatique portable (54) et connecté à ladite interface, desdites options de configuration associées avec des options de configuration de machine de client telles que définies par ledit schéma reçu ;
la génération, en utilisant ledit processeur (208), desdites options de configuration de machine de client en utilisant un deuxième jeu d'instructions de programmation d'options de configuration ; lesdites options de configuration de machine de client étant générées sur un afficheur (224) dudit dispositif informatique portable (54) et commandées par ledit processeur (208), ladite génération permettant d'éviter l'exécution de l'un quelconque desdits scripts sur ledit dispositif informatique portable ;
la réception (340), d'un dispositif d'entrée (200, 202, 204) dudit dispositif informatique portable (54) connecté au dit processeur (208), d'une sélection d'options de configuration desdites options de configuration générées en utilisant ledit deuxième jeu d'instructions de programmation d'options de configuration, ladite réception et ladite sélection permettant d'éviter l'exécution de l'un quelconque desdits scripts sur ledit dispositif informatique portable ;
la réception (345), par l'intermédiaire de ladite interface, d'une ou de plusieurs pages Web dudit site Web (90) correspondant à ladite sélection d'options de configuration ; et
la génération (350), en utilisant ledit processeur (208), desdites une ou plusieurs pages Web sur ledit afficheur (224) dans ledit dispositif informatique portable (54).

2. Procédé selon la revendication 1, dans lequel lesdites options de configuration associées comprennent au moins l'un d'un lieu, du nombre d'éléments à afficher, de la présentation d'images, d'une police de caractère ou d'une couleur.

3. Procédé selon la revendication 1 ou 2, dans lequel ledit schéma (98) est reçu d'un serveur de schémas (62) séparé dudit serveur (58).

4. Procédé selon la revendication 1 ou 2, dans lequel ledit schéma (98) est reçu dudit serveur (58, 62).

5. Procédé selon l'une quelconque des revendications 1 à 4, dans lequel lesdits scripts comprennent l'un de Javascripts ou du langage de balisage hypertexte dynamique.

6. Support de mémorisation pouvant être lu par un ordinateur configuré pour maintenir une pluralité d'instructions de programmation pour effectuer un procédé selon l'une quelconque des revendications 1 à 5 lorsqu'elles sont exécutées sur un processeur (208) d'un dispositif informatique portable (54).

7. Dispositif informatique portable (54) comprenant :
une mémoire (212, 216) configurée pour maintenir une application de navigation Web (82) ;
au moins un processeur (208) connecté à ladite mémoire (212, 216) et configuré pour exécuter ladite application de navigation Web (82) ;
une interface connectée audit processeur (208) ;
un afficheur (224) connecté audit processeur (208) ; et
un dispositif d'entrée (200, 202, 204) connecté audit processeur (208) ;
ledit dispositif informatique portable (54) étant configuré pour effectuer l'un quelconque des procédés des revendications 1 à 5.

8. Système (50) comprenant le dispositif informatique portable (54) de la revendication 7, pour fournir un contenu interactif sur le dispositif informatique portable (54), le système comprenant en outre :
au moins un serveur (58, 62) configuré pour mémoriser un site Web (90) et un schéma (98) ; ledit site Web (90) comprenant un premier jeu d'instructions de programmation d'options de configuration et comprenant au moins une page Web (96-1, 96-2, 96-3) ; ledit premier jeu d'instructions de programmation comprenant des scripts et étant associé à des options de configuration dudit site Web ; ledit schéma pointant vers lesdites options de configuration dans le site Web (90) ;
dans lequel le dispositif informatique portable (54) peut être connecté audit au moins un serveur (58, 62) par l'intermédiaire d'un réseau (66) ;
ledit processeur (208) est configuré pour extraire (330) des options de configuration dudit premier jeu d'instructions de programmation d'options de configuration sur la base dudit schéma (98) ; et
ledit processeur (208) est en outre configuré pour générer (350) lesdites une ou plusieurs pages Web sur ledit afficheur (224) par l'intermédiaire de ladite application de navigation Web (82).

9. Système selon la revendication 8, dans lequel lesdites options de configuration comprennent au moins l'un d'un lieu, du nombre d'éléments à afficher, de la présentation d'images, d'une police de caractère ou d'une couleur.

10. Système selon la revendication 8 ou la revendication 9, dans lequel ledit au moins un serveur (58, 62) comprend un serveur Web (58) pour héberger lesdites pages Web et un serveur de schémas (62) pour héberger ledit schéma (98).

11. Système selon l'une quelconque des revendications 8 à 10, dans lequel ledit premier jeu d'instructions de programmation comprend des scripts et lesdits scripts comprennent l'un de Javascripts ou du langage de balisage hypertexte dynamique.

12. Système selon l'une quelconque des revendications 8 à 11, dans lequel lesdits scripts ne sont pas mémorisés localement sur ledit dispositif informatique portable (54).
